(19) **Europäisches Patentamt / European Patent Office / Office européen des brevets**

(11) **EP 3 888 819 A1**

(12) **EUROPEAN PATENT APPLICATION**
published in accordance with Art. 153(4) EPC

(43) Date of publication:
06.10.2021 Bulletin 2021/40

(51) Int Cl.:
*B22F 3/105* (2006.01)        *B22F 3/16* (2006.01)
*B22F 3/24* (2006.01)         *C22C 1/04* (2006.01)
*C22C 1/05* (2006.01)         *C22C 19/05* (2006.01)
*B33Y 10/00* (2015.01)        *B33Y 30/00* (2015.01)

(21) Application number: 19890055.7

(22) Date of filing: 29.11.2019

(86) International application number:
PCT/JP2019/046786

(87) International publication number:
WO 2020/111231 (04.06.2020 Gazette 2020/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.11.2018 JP 2018223096

(71) Applicant: Hitachi Metals, Ltd.
Minato-ku
Tokyo 108-8224 (JP)

(72) Inventors:
• KOSEKI Shuho
  Tokyo 108-8224 (JP)
• YAMADA Yuta
  Tokyo 108-8224 (JP)
• SHIRATORI Hiroshi
  Tokyo 100-8280 (JP)
• KUNITOMO Kenichiro
  Tokyo 100-8280 (JP)

(74) Representative: Hoffmann Eitle
Patent- und Rechtsanwälte PartmbB
Arabellastraße 30
81925 München (DE)

(54) **MANUFACTURING METHOD FOR ADDITIVELY MANUFACTURED BODY AND MANUFACTURING DEVICE FOR ADDITIVELY MANUFACTURED BODY**

(57) To provide a method for manufacturing an additively manufactured body, which can suppress the occurrence of defects in the additively manufactured body.

The present invention includes: an additive manufacturing step of shaping an additively manufactured body 7 in a heating state; and a machining step of machining the additively manufactured body 7 in a state in which the heating state is maintained. In the present invention, the additively manufactured body 7 can be shaped by the additive manufacturing step and the machining step which are repeated a plurality of times. The heating state is maintained also in the additive manufacturing step and the machining step which are repeated a plurality of times.

FIG. 1

PREHEATING SUBSTRATE — S101

ADDITIVE MANUFACTURING (POWDER BUILDING) — S103

MACHINE WORK (CUTTING WORK, PLASTIC WORKING ...) — S105

COOLING (SLOW COOLING / NATURAL COOLING) — S107

HEATING STATE MAINTAINED

EP 3 888 819 A1

**Description**

Technical Field

The present invention relates to a manufacturing method for an additively manufactured body suitable for difficult-to-cut materials such as a cemented carbide and cermet; and a manufacturing apparatus.

Background Art

The additive manufacturing method is, as disclosed in Patent Literature 1 for example, a method for obtaining an additively manufactured body having a three-dimensional shape, by repeating an operation of applying a pulsed laser energy to a raw material powder which is supplied to a substrate, and melting and solidifying the raw material powder. According to the additive manufacturing method, it is possible to obtain a product having the three-dimensional shape in a net shape or a near net shape. For information, the term "additive manufacturing (Additive Manufacturing)" which is disclosed in Patent Literature 1 is regarded as an industry standard term, as is defined in ASTM (American Society for Testing and Materials) F2792.

Citation List

Patent Literature

Patent Literature 1: JP 2016-502596 A

Summary of invention

Technical Problem

The additively manufactured body that is obtained by the additive manufacturing method can form a near net shape which is a shape close to a design dimension, but the additive manufactured body as it is cannot attain the dimensional accuracy and surface roughness which are obtained by cutting or plastic working. Accordingly, the additive manufacturing method requires machine work as a subsequent step in some applications, and in order to benefit from the near net shape obtained by the additive manufacturing method, the machine work needs to be performed without causing defects such as cracks or fractures in the additively manufactured body. In addition, in the additive manufacturing, materials having excellent properties such as high strength and high corrosion resistance are used in many cases, but the workability of the additively manufactured body is poor which is formed of these materials, and it has been difficult to efficiently obtain a desired shape. Examples of the machine work include cutting, but when the additively manufactured body is formed of a difficult-to-cut material, the life of a cutting tool becomes short and the efficiency of the machining to be performed is low; and besides, abnormal abrasion occurs in the tool during cutting due to the continuation of an unreasonable cutting state, the increase of cutting resistance and cutting temperature, and the like occur, and there is a possibility that defects (surface flaw, crack and fracture) occur in the additively manufactured body.

Then, an object of the present invention is to provide a manufacturing method for an additively manufactured body, which can machine the additively manufactured body and also suppress the occurrence of defects. In addition, another object of the present invention is to provide a manufacturing apparatus that can realize such a manufacturing method.

Solution to Problem

A method for manufacturing an additively manufactured body (hereinafter simply referred to as an additive manufacturing method in some cases) according to the present invention includes: an additive manufacturing step of shaping the additively manufactured body in a heating state; and a machining step of machining the additively manufactured body in a state in which the heating state is maintained.

In the manufacturing method of the present invention, in a case where the additive manufacturing step and the machining step are repeated a plurality of times, the heating state is preferably maintained in the additive manufacturing step and the machining step which are repeated a plurality of times.

The manufacturing method of the present invention preferably includes a preheating step of heating a substrate on which the additively manufactured body is to be shaped, until the substrate becomes a heated state, prior to the additive manufacturing step.

In the manufacturing method of the present invention, the additively manufactured body preferably includes a difficult-to-cut material having a machinability index of 50 or lower.

Cemented carbide or cermet, further a high hardness material, a superalloy or the like is preferably applied as the difficult-to-cut material.

In the manufacturing method of the present invention, the heating method is not limited as long as the heating state can be stably maintained. On the other hand, the heating method needs to hold the additively manufactured body in an appropriate temperature range according to a type of a material constituting the body, and high-frequency induction heating is preferably applied from the viewpoint of temperature control. In addition, a semiconductor laser (for example, VCSEL: Vertical Cavity Surface Emitting LASER) is useful as local heating from the surface. In addition, by using a plurality of heat sources in combination, it is also possible to maintain the complicated shape of the additively manufactured body at a more stable temperature. The combination of heating for the entire additively manufactured body by the high-frequency induction heating and heating for the surface portion of the shaped body by the semiconductor laser contributes to stable shaping in a shorter time.

In the manufacturing method of the present invention, in the additive manufacturing step, the additively manufactured body is shaped by melting a raw material powder which is supplied continuously or intermittently, and solidifying the melt.

In addition, in the manufacturing method of the present invention, the heated state preferably has a temperature of 1/6 Mp or higher and 5/6 Mp or lower, where Mp (°C) is a melting point of the material constituting the additively manufactured body. In this temperature range, atomic diffusion in the material occurs, in other words, the generation of residual stress is mitigated when the melt solidifies which has been formed at the time of additive manufacturing, and accordingly, it can be suppressed that the defects such as surface flaws, cracks and fractures are formed in the additively manufactured body. In addition, in this temperature range, the material itself tends to be softened, accordingly when the material has been machined, a load for the work becomes small, and accordingly, it becomes possible to machine the material without damaging the cutting tool.

In addition, in the manufacturing method of the present invention, the machining step preferably includes machining with a ceramic tool.

An apparatus for manufacturing the additively manufactured body (hereinafter, simply referred to as additive manufacturing apparatus, in some cases) according to the present invention includes: a shaping unit for shaping the additively manufactured body; a machining unit for machining the additively manufactured body; and a heating unit for heating the additively manufactured body, at least in a process of shaping the additively manufactured body by the shaping unit and in a process of the machining by the machining unit.

As the heating source in the present invention, one or both of the high-frequency induction heating and the semiconductor laser are preferably used.

Advantageous Effects of Invention

According to the present invention, the additively manufactured body is machined while the heated state in the additive manufacturing step is maintained. Accordingly, according to the present invention, it is possible to obtain an additively manufactured body which has been machined into a final shape, while suppressing the generation of defects in a difficult-to-cut material such as the cemented carbide or the cermet.

Brief Description of Drawings

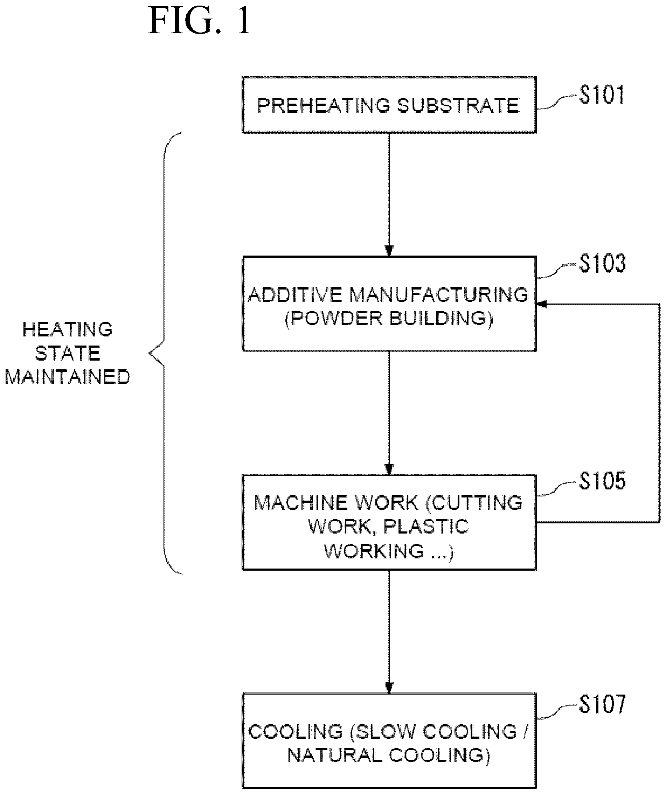

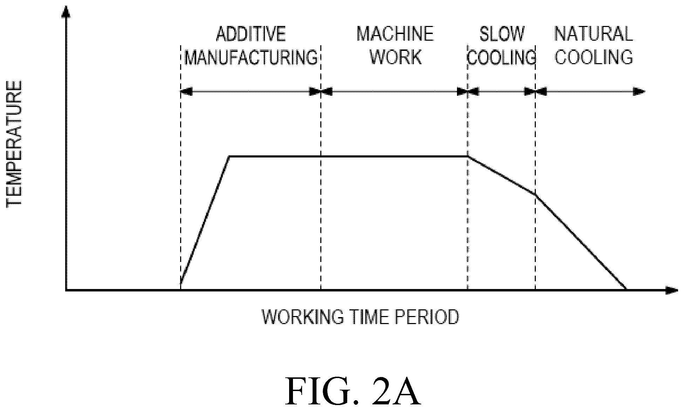

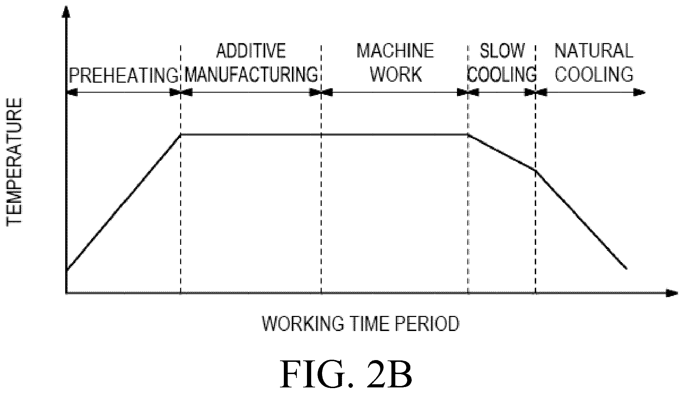

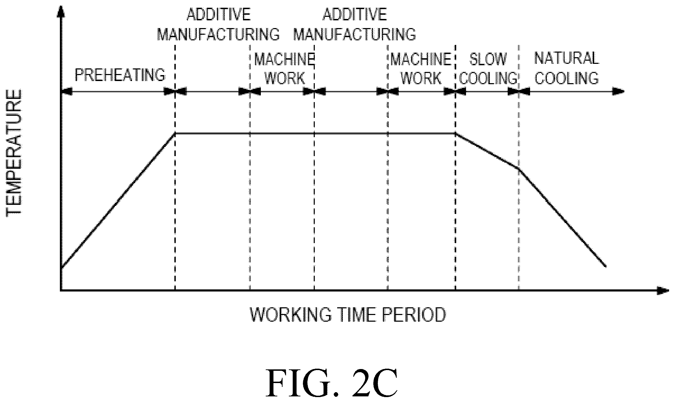

FIG. 1 is a flowchart showing main steps in an additive manufacturing method according to the present embodiment. FIG. 2A shows one example of a relationship between an elapsed time period and a temperature in the main steps of the additive manufacturing method according to the present embodiment, FIG. 2B shows another example of the relationship between the elapsed time period and the temperature in the main steps of the additive manufacturing method according to the present embodiment, and FIG. 2C shows further another example of the relationship between the elapsed time period and the temperature in the main steps of the additive manufacturing method according to the present embodiment.

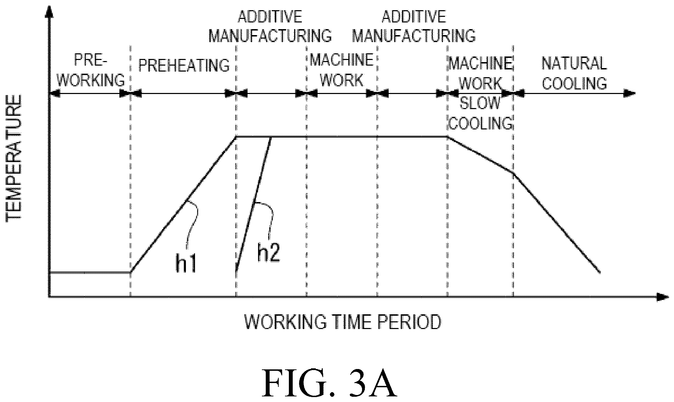

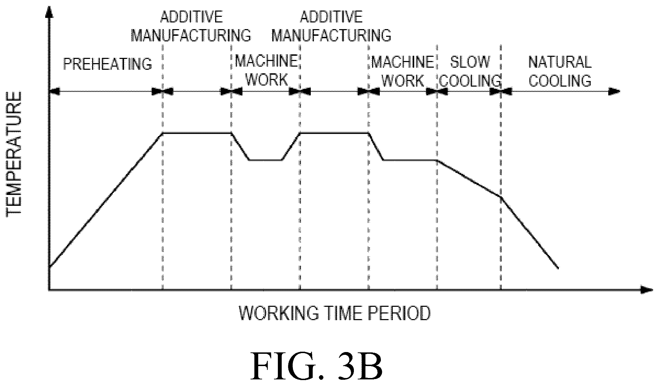

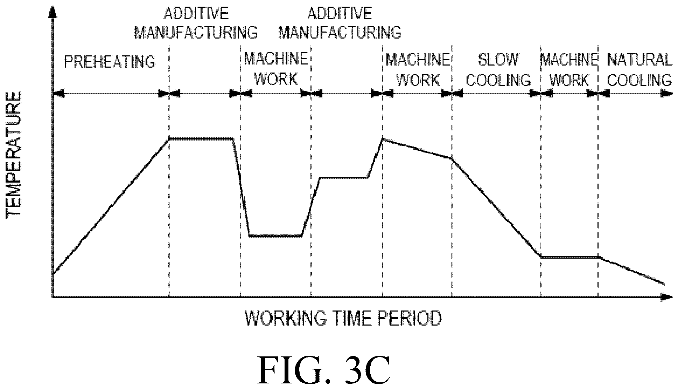

Similarly, FIG. 3A shows one example of a relationship between the elapsed time period and the temperature in the main steps of the additive manufacturing method according to the present embodiment, FIG. 3B shows another example of the relationship between the elapsed time period and the temperature in the main steps of the additive manufacturing method according to the present embodiment, and FIG. 3C shows further another example of the relationship between the elapsed time period and the temperature in the main step of the additive manufacturing method according to the present embodiment.

FIG. 4 is a plan view showing a schematic configuration of an additive manufacturing apparatus according to the present embodiment.

FIG. 5A and FIG. 5B each show main parts of the additive manufacturing apparatus according to the present embodiment, FIG. 5A showing a state before a substrate is attached, and FIG. 5B showing a step of preheating the substrate after the substrate is attached.

FIG. 6A and FIG. 6B each show a main part of the additive manufacturing apparatus according to the present embodiment, FIG. 6A showing an additive manufacturing step, and FIG. 6B showing a machining step.

FIG. 7 is a photograph showing damage forms of a milling cutter by comparison, in the first Example.

FIG. 8 is a photograph showing damage forms of an end mill by comparison, in the first Example.

FIG. 9A and FIG. 9B each show an evaluation result of second Example, FIG. 9A being a graph showing a relationship between a measurement temperature and hardness, and FIG. 9B being a graph showing a relationship between a heating and holding time period and hardness.

FIG. 10 is a graph showing results of an abrasion test in a first experimental example.

Description of Embodiments

One embodiment of the present invention will be described below in detail with reference to the drawings.

As is shown in FIG. 1, the additive manufacturing method according to the present embodiment includes: a preheating step for a substrate (S101); an additive manufacturing step (S103); a machining step (S105); and a cooling step (S107).

In the additive manufacturing method according to the present embodiment, a heating state in the additive manufacturing step (S103) is maintained until the machining step (S105) is finished. Due to this heating state being maintained, the additive manufacturing method according to the present embodiment can suppress the generation of the defects such as surface flaws, cracks and fractures which occur in the difficult-to-cut materials such as the cemented carbide and the cermet. Each step will be sequentially described below.

[Preheating step for substrate (S101)]

Firstly, the substrate will be described; and a reason for preheating the substrate as a preferred embodiment of the present invention, means for heating the substrate, and a preheating temperature will be described in this order.

The substrate in the present embodiment is an object on which the additively manufactured body is shaped in the subsequent additive manufacturing step. A raw material powder which is supplied is melted by thermal energy being applied, and is also cooled and solidified on a surface of the substrate. A precursor of the additively manufactured body is layered by an operation of repeating the supply, melting, cooling and solidification of the raw material powder, and finally, the additively manufactured body having a desired shape is obtained.

The substrate is an object on which the supplied raw material powder is melted and solidified, and if a temperature gradient between the substrate and an initial precursor to be shaped is large, there is a case where deformation of the precursor cannot be ignored due to the generated thermal stress and residual stress. In addition, in a case where the additively manufactured body is formed from, for example, a cemented carbide, it is concerned that peeling occurs at an interface between the substrate and the precursor at the time of shaping, because the cemented carbide has high strength, but on the other hand, the toughness is low. Then, it is preferable to perform preheating of heating the substrate prior to the additive manufacturing step. By preheating, the deformation due to the thermal stress and the residual stress can be mitigated.

The means for preheating the substrate is not limited as long as the purpose can be achieved. For example, the substrate can be heated by: the high-frequency induction heating; heating by a semiconductor laser, a gas burner, an infrared electric heater, a heating furnace, irradiation with an electron beam or a laser, or irradiation with a halogen lamp; a heating method using a heating wire as a heat source such as a hot plate; and the like. The substrate may be heated by the use of these means alone or in combination. This heating means can also be applied for maintaining a heating state in the subsequent additive manufacturing step S103 and machining step S105.

A preferred example in the present embodiment includes maintaining a heating state in the preheating step S101, specifically a heating temperature, also in the additive manufacturing step S103 and the machining step S105. In order to stably maintain the heating temperature, it is effective to inject energy by the high-frequency induction heating among the above heating means. According to the high-frequency induction heating, Joule heat is generated in the object by an eddy current and electrical resistance of the metal, and self-heating of the metal occurs; and accordingly, even a member having a large heat capacity can be sufficiently heated. In particular, by a heat insulating material covering a portion except a portion at which the heating temperature is maintained, the heating temperature can be stably maintained. Another heating method of heating an object from the outside can inject sufficient energy into a member to be heated which has a small heat capacity.

The heating temperature in the preheating step S101 is not limited as long as the purpose can be achieved.

However, in order to stably shape the difficult-to-cut material, it is important to control the temperature of the additively manufactured body which is subjected to the additive manufacturing. In order to moderate a gradient of thermal stress at the time of rapid cooling in the additive manufacturing and to mitigate the accumulation of strain, it is preferable to heat and maintain the material constituting the additively manufactured body at a temperature of 1/6 Mp or higher, where Mp (°C) is a melting point of the material. In this temperature range, the movement of transition tends to easily occur, accordingly the strain accumulation is restained, and accordingly the defect resists occurring. The heating temperature in the preheating step does not need to be higher than necessary, and the heating temperature can be set at 5/6 Mp or lower. A preferable heating temperature is 1/3 Mp to 3/4 Mp. A further preferable heating temperature is 2/5 Mp to 3/4 Mp.

When the additively manufactured body is formed from a cemented carbide, the heating temperature in the preheating step is preferably 500°C or higher, a more preferable heating temperature is 600°C or higher, and a further more preferable heating temperature is 650 to 900°C. In addition, the maintenance and an allowable range of the heating temperature will be described later.

The material constituting the substrate is not limited as long as the purpose can be achieved, and a metal material or a ceramic material can be used. However, when being heated by the high-frequency induction heating, the material shall be used which can be heated by the high-frequency induction heating. Accordingly, it is preferable that the substrate is basically formed from a metal material, and among the materials, a material is preferable which has resistance in a range of the heating temperature, and besides, has small expansion and contraction due to heating. Specifically, preferable materials are Ni-based alloys, in particular, a Ni-based superalloy; Co-based alloys, in particular, a Co-based superalloy; Cr-based alloys; Mo-based alloys; and a Fe-based superalloy.

[Additive manufacturing step (S103)]

Next, the additive manufacturing step will be described.

The additive manufacturing step shapes a three-dimensional additively manufactured body on the substrate. The method of additive manufacturing is not particularly limited, but for example, a directed energy deposition method such as laser melt deposition, a powder bed fusion binding method, plasma powder building up, or the like can be used.

The additive manufacturing according to the directed energy deposition method repeats a procedure of: melting a raw material powder by using a heat source of any one of laser, an electron beam, plasma and an arc; attaching the melted raw material powder to a surface of the substrate; and solidifying the melt, while moving the position. Furthermore, the additive manufacturing repeats a procedure of melting and solidifying the raw material powder on the surface of the precursor which has been shaped on the substrate, while moving the position, and thereby shapes a desired three-dimensional additively manufactured body.

The additive manufacturing step repeats the procedure of melting and solidifying the raw material powder, while moving the position. There is a possibility that defects occur due to the thermal stress caused by a temperature gradient generated between the molten portion (molten pool) and its solidified periphery. For example, in a case where the additively manufactured body is formed from a cemented carbide, the cemented carbide has high strength, but on the other hand the toughness is low, and accordingly the defects due to the thermal stress tend to easily occur.

Then, in a desirable embodiment, the heating state in the preheating step S101 is maintained also in the additive manufacturing step. In a case where the preheating step S101 is not performed, the additively manufactured body is heated as the additive manufacturing starts, and the heated state is maintained until the additive manufacturing step is finished.

[Machining step (S105)]

If a desired additively manufactured body has been obtained, the body is transferred to a machining step. As described above, the additively manufactured body can form a near net shape of a manufactured object which is desired to be finally obtained, but the additively manufactured body as it is cannot attain the dimensional accuracy and surface roughness which are obtained by cutting or plastic working. Because of this, in order to obtain a desired shape and size, the additively manufactured body is subjected to a machine work.

The machining step in the present embodiment includes the machine work broadly, and most typically includes cutting works (milling, drilling, lathe turning and the like). Here, when the additively manufactured body is formed from a difficult-to-cut material, for example, a cemented carbide or a cermet, the cutting work is not easy. Then, in the present embodiment, the heating state in the additive manufacturing step is maintained also in the machining step.

In a heated state, even though the additively manufactured body is formed of a difficult-to-cut material, the hardness of the additively manufactured body is lowered. Accordingly, for example, when a cutting tool has collided with the additively manufactured body, shear deformation tends to easily occur, and resistance at the time when chips are produced is small. In addition, it is difficult to cut, at room temperature, a material in which hard particles are dispersed, whereas chips are produced only after heating the material, the hard particles serve as starting points though depending on a material composition, and the chips are divided; and thereby the material becomes easy to be cut, which leads to an improvement in properties of the surface to be worked, due to attachment of the chips to the tool. In the present embodiment, the additively manufactured body is subjected to the cutting work while the heating state in the additive manufacturing step is maintained, and accordingly, the cutting work can be said to be a highly efficient work in which an energetic loss is also small, compared to a case where the additively manufactured body is heated again after the heating state has been released. It should be noted that the temperatures during the additive manufacturing and during the machine work can each be controlled to optimum conditions. Although a residual stress is generated by the machine work in some cases, it becomes possible to perform such a control as to work the additively manufactured body in a state in which the residual stress is mitigated, or on the contrary, as to harden the surface or improve chipping resistance by imparting the residual stress to the additively manufactured body.

In the above description, the cutting work has been described, but the present embodiment allows the machining step to perform other machine work such as plastic working and grinding work, and to perform these works in combination.

When the machining step is the cutting work, it is preferable to use a ceramic cutting tool.

At room temperature, the ceramic cutting tool has the same degree of hardness as the cemented carbide or the cermet, which is, for example, 1300 to 1800 by HV. Accordingly, usually, it is difficult to cut the cemented carbide or the cermet with the ceramic cutting tool. However, in the above heated state, a level to which the cemented carbide or the cermet is softened is larger than that of the ceramic, and accordingly a difference occurs in the hardness between the both. By using this difference, it is possible to cause a cutting work phenomenon. In addition, the ceramic cutting tool resists causing adhesion due to contact with a metal material, and accordingly the chips in the case of the cemented carbide or the cermet can be stably discharged. Thus, the ceramic cutting tool is effective for the cutting work in a heated state in the present embodiment.

As a material of the ceramic cutting tool, alumina-based ceramics, silicon nitride-based ceramics, zirconia-based ceramics and the like can be used. As the silicon nitride-based ceramics, sialon is preferable.

[Cooling step (S107)]

If the additively manufactured body has been subjected to the necessary works, the heating state is released and the additively manufactured body is cooled.

The cooling step is performed in order of slow cooling and natural cooling, for example. Specifically, it is preferable to apply the slow cooling having a slow cooling rate until the temperature reaches a temperature range in which the material constituting the additively manufactured body is less susceptible to cracking, and to apply the natural cooling having a fast cooling rate from the temperature range less susceptible to cracking. Here, the slow rate and fast rate in the cooling rate is a relative relation, and a specific cooling rate in the slow cooling may be determined on the basis of the material constituting the additively manufactured body.

[Maintenance of heating state]

Next, several patterns of maintaining the heating state which the present embodiment includes will be described with reference to FIG. 2A to FIG. 3C.

FIG. 2A shows a pattern in which the heating temperature that has been raised in the additive manufacturing step is maintained through the additive manufacturing step and the machining step. FIG. 2A does not include a preheating step.

As previously described, the heating temperature is selected from a range of 1/6 Mp or higher and 5/6 Mp or lower, and accordingly the heating temperature is maintained in this temperature range.

It is preferable to maintain the heating temperature (T) in the additive manufacturing step so as not to change in the machining step. However, the above operation is not practical in consideration of an industrial production scale. Accordingly, in the present embodiment, even if the temperature has varied within a range of $T \pm 100°C$ or smaller with reference to the heating temperature (T) which has been set in the machining step, the temperature shall be regarded as being maintained. A preferable temperature variation range is $T \pm 50°C$ or smaller, a more preferable temperature variation range is $T \pm 30°C$ or smaller, and a further more preferable temperature variation range is $T \pm 10°C$ or smaller. The maintenance of the heating temperature is followed by subsequent patterns as well.

It should be noted that the maintenance in the range here of $T \pm 100°C$ or smaller is a maintenance range of the temperature in the machining step of one time. The maintenance does not mean that in a case, for example, where the additive manufacturing step and the machining step are repeated each two times, the temperature difference between the heating temperature in the first machining step and the heating temperature in the second machining step fall within a range of $T \pm 100°C$ or smaller. In other words, the maintenance means that the heating temperature in the first machining step falls within $T \pm 100°C$ or smaller.

Next, FIG. 2B shows a pattern in which the heating temperature that has been raised in the preheating step is maintained through the preheating step, the additive manufacturing step and the machining step. The heating temperature described here means the highest temperature in the preheating step. It should be noted that it is difficult to uniformalize the temperature of the entire additively manufactured body. Then, the temperatures are checked beforehand that are surface temperatures of side surfaces of the additively manufactured body at the time of being heated by the high-frequency induction heating, in other words, the maximum temperature, and the surface temperature of the central portion of the additively manufactured body; and the temperature of the central portion of the additively manufactured body serving as an actual portion to be shaped is controlled so as to become a desired temperature or higher, on the basis of data of the correlation (temperature difference or the like) between the side surface temperature and the central portion temperature of the additively manufactured body.

There is a case where the additive manufacturing step and the machining step are each performed only once, as is shown in FIG. 2A and FIG. 2B, but there is also a case where the steps are each repeated a plurality of times, as is shown in FIG. 2C, for the following reasons.

At the time of the additive manufacturing, a powder is injected into a molten pool which has been formed by, for example, laser irradiation, but it is difficult to control the shape and size of the molten pool. Because of this, there is a case where such a procedure is repeated that after the shape of the additively manufactured body has been treated by the machine work, the resultant body is subjected to the additive manufacturing. Specifically, by an operation of alternately repeating the additive manufacturing step and the machining step, it becomes easy for the working tool to reach the site to be worked, the work can be stably performed, and a desired shape can be obtained. Thus, the step of repeating the additive manufacturing step and the machining step is a useful method for manufacturing a member having a complicated shape.

It should be noted that FIG. 2C exemplifies two times as the plurality of times, but it is needless to say that the additive manufacturing step and the machining step may be performed three times or more each. As is shown in FIG. 2C, even in a case where the additive manufacturing step and the machining step are repeated a plurality of times, the heating state is maintained in processes to be repeated.

Next, FIG. 3A shows a pattern in which a machine work is performed prior to the additive manufacturing, and a machine work is further performed after the additive manufacturing. Examples of the machine work which is performed prior to the additive manufacturing include such a machine work as to shape the substrate in order to form a shape suitable for subsequent additive manufacturing. This machining step is different in the object to be worked, from the machine work for the additively manufactured body, which is performed after the additive manufacturing step. For this reason, in FIG. 3A, the machine work has been written as "pre-working" so as to be distinguished from the machine work for the additively manufactured body.

The pattern of FIG. 3A includes: a pattern h1 in which the substrate is preheated beforehand and is subjected to the additive manufacturing and the machine work; and a pattern h2 in which the substrate is not preheated but is heated at the time of the additive manufacturing. In addition, in FIG. 3A, an example is shown in which the pre-working is performed before the preheating, but the pre-working can be performed between the preheating and the additive manufacturing.

Next, FIG. 3B shows a pattern in which the temperatures of the additive manufacturing step and the machining step are different. This pattern is suitable for the case where the heating temperature suitable for the additive manufacturing step is different from the heating temperature suitable for the machining step. However, it is preferable that the difference in temperature remains within the above range of T±200°C or smaller.

Next, FIG. 3C shows a pattern in which the heating temperatures of the additive manufacturing step and the machining step are different from each other, and in addition, the heating temperatures of the machining steps are different which are performed a plurality of times. This pattern means that each of the machining steps can arbitrarily select the heating temperature in the above temperature range of 1/6 Mp or higher and 5/6 Mp or lower. When an additively manufactured body that has been heated to a high temperature is subjected to the cutting work, dimensional shrinkage occurs in the cooling process. Because of this, it is difficult to perform a high-precision work by cutting during heating. Then, a precise machine work becomes possible by selecting a low temperature in the above temperature range. It is acceptable to add a machining step particularly in a final stage, for example, a cooling (slow cooling or natural cooling) stage, and by selecting a low temperature such as room temperature in this machining step, high working accuracy can be obtained.

In addition, as is shown in FIG. 3C, when the additive manufacturing steps are performed a plurality of times, here two times, different heating temperatures can be selected. If the temperature of the additively manufactured body is in a state of being higher than the lower limit of the temperature suitable for cutting, the additively manufactured body can be subjected to the cutting work even in the slow cooling. It should be noted that a sufficient cooling process of the additively manufactured body is provided before the machine work, in order to work the body more precisely. Here, in order to stably perform the cutting work, it is preferable to wait for the start of the machine work until the temperature becomes constant.

[Application Material]

The material to which the additive manufacturing method of the present embodiment is applied is not limited, but it is preferable that the method is applied to a metal material which is referred to as a so-called difficult-to-cut material.

When the working which is performed in the machining step S105 is cutting, a difficult-to-cut material shall be used, but in the present embodiment, whether or not the material is a difficult-to-cut material is indicated by the machinability index. The machinability index is expressed by a percentage of a cutting speed of a material to be compared, at the time when the same tool life as a certain tool life is used, where the cutting speed at the time when free cutting steel including sulfur (AISI-B1112) has been cut with the certain tool life is defined as 100.

In the present embodiment, the manufacturing method is suitable for a difficult-to-cut material having a machinability index of 50 or smaller, and the material is a material which has a high cutting temperature and cutting resistance, accordingly wears a tool rapidly, and resists being cut. The cemented carbide and the cermet among the materials, of which the hardnesses are high, can be cut at a practical cutting speed when the present embodiment is applied thereto. The difficult-to-cut materials tend to have low thermal conductivity and high hardness at high temperatures. Because of this, temperature gradients tend to be easily formed by localized heating and quenching in the additive manufacturing, and defects tend to occur due to the generation of thermal stresses. In order to reduce the defects, it is preferable to maintain the heating state in the additive manufacturing step and the machining step.

Here, the cemented carbide (Cemented Carbide) and the cermet (Cermet) are each a composite material formed of a sintered body that mainly includes; a hard phase which includes at least one type of a carbide, a nitride, an oxide, an oxynitride, a carbonitride, a boride and a silicide of a fourth group transition metal, a fifth group transition metal, and a sixth group transition metal of the periodic table; and a binder phase which includes at least one type of Fe, Co, Ni, Cr and Mo.

The cemented carbide is typically a WC-Co based alloy, but a WC-TiC-Co based alloy, a WC-TaC-Co based alloy, a WC-TiC-TaC-Co based alloy, or the like is also used. The binder phase contains other metal elements such as Cr and Cu, in some cases.

In addition, the cermet is typically a TiN-Ni based alloy, a TiN-TiC-Ni based alloy, a TiC-Ni-Mo$_2$C based alloy, or the like.

The cemented carbide is generally used as a cutting tool, but in the case of an application in which toughness is required such as a die which will be described later, it is preferable to adopt a composition different from a composition which is used as the cutting tool. The same is applied to the cermet.

Specifically, when the additively manufactured body formed from the cemented carbide is used in, for example, the die, it is preferable that the amount of Co in the WC-Co based alloy is 20 mass% or more and 50 mass% or less. The amount of Co is more than that of a WC-Co based alloy which is used as the cutting tool. Thereby, the toughness, strength and hardness suitable for use as the die are given.

Materials to which the additive manufacturing method of the present embodiment is applied include, in addition to the cemented carbide or the cermet, a high hardness material and a superalloy.

The high hardness material refers to an Fe-based material of which the hardness exceeds 50 HRC, and includes JIS SKD11, SKH51, SUS630 or the like.

The superalloy is an alloy which mainly includes elements such as Ni, Cr, Co and Mo, except Fe. Among the superalloys, a Ni-based superalloy is an alloy which contains, for example, 50 mass% or more of Ni, and further contains an element selected from the group consisting of chromium (Cr), cobalt (Co), molybdenum (Mo), tungsten (W), niobium (Nb), aluminum (Al), titanium (Ti), iron (Fe), zirconium (Zr), tantalum (Ta), vanadium (V), hafnium (Hf), manganese (Mn), silicon (Si), lanthanum (La), magnesium (Mg), carbon (C), boron (B) and the like. In general, the Ni-based superalloy is an alloy which contains a gamma phase as a main phase. The gamma phase does not cause phase transformation in a cooling process, maintains its crystal structure as it is, and accordingly resists causing cracking. In addition, when the Ni-based superalloy is shaped on steel or the cemented carbide, an intermediate layer is formed in the vicinity of the interface; but in this case, a fraction of the gamma phase in the intermediate layer becomes high, and a remarkable decrease in toughness can be suppressed.

Furthermore, as a difficult-to-cut material having a machinability index of 50 or lower, there is a Ti alloy (for example, Ti-6 mass% Al-4 mass% V).

[Applications]

The application of the additively manufactured body which is obtained by the present invention is not limited, but preferable applications include wear-resistant members such as dies which are used for warm and hot forging, casting, die casting and hot stamping, and as bearings.

These dies come into contact with a material to be molded at a high temperature, and friction is repeated; and wear resistance is required so that the die repeats stable molding. Because of this, these dies are produced from a material which can stably provide a high strength at a high temperature, and thereby achieve the long life. Specific examples thereof include composite materials such as a cemented carbide and cermet, die steel, and high-speed tool steel.

Each of these materials corresponds to a difficult-to-cut material, and a load for the machine work is large at the time when the material is formed into a desired die shape. Then, when the die is formed with the use of such a material, the additive manufacturing method is used; and then, the die can be shaped into a near net shape which is close to the design dimension, and accordingly the load for the machine work can be reduced.

However, even the additive manufacturing method is used, the machine work is necessary in order to adjust the final surface roughness and adjust the dimensional accuracy. Accordingly, the die formed from the difficult-to-cut material is a suitable application for the present embodiment in which the machine work is performed in a state in which the heating temperature is maintained, and thereby the load for the machine work can be reduced.

[Additive manufacturing apparatus]

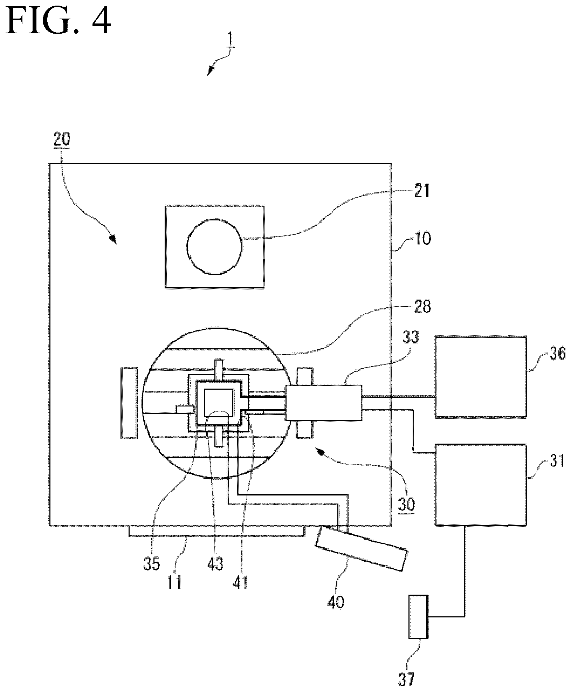

Next, an additive manufacturing apparatus 1 which is preferable for carrying out the present invention will be described with reference to FIG. 4 to FIG. 6B.

The additive manufacturing apparatus 1 has a function of shaping an additively manufactured body, and a function of subjecting the shaped additively manufactured body 7 to the cutting work. In addition, the additive manufacturing apparatus 1 has a function of performing the additive manufacturing step of the additively manufactured body 7 and a cutting step (machining step) of the additively manufactured body 7, while maintaining the heating state. It should be noted that the function of the cutting work can be replaced with a grinding work, lathe turning or the like.

<Whole configuration>

The additive manufacturing apparatus 1 includes: a housing 10; a working unit 20 for shaping the additively manufactured body 7 and subjecting the shaped additively manufactured body 7 to the cutting work; a heating unit 30 for maintaining a heating state from preheating of a substrate 3 to the end of cutting of the additively manufactured body 7; and a control unit 40 for controlling operations of the working unit 20 and the heating unit 30.

<Housing 10>

The housing 10 accommodates the working unit 20 and the heating unit 30, and isolates the inside from the surroundings. The housing 10 is provided with a door 11, and the door 11 is closed when the working unit 20 and the heating unit 30 are operated. An operator of the additive manufacturing apparatus 1 opens the door 11 and enters the inside of the housing 10, when attaching the substrate 3, taking the additively manufactured body 7 which has been subjected to the cutting work, or the like.

In addition, in FIG. 4, the inside of the housing 10 can be visually recognized by being looked at through the ceiling of the housing 10.

<Working unit 20>

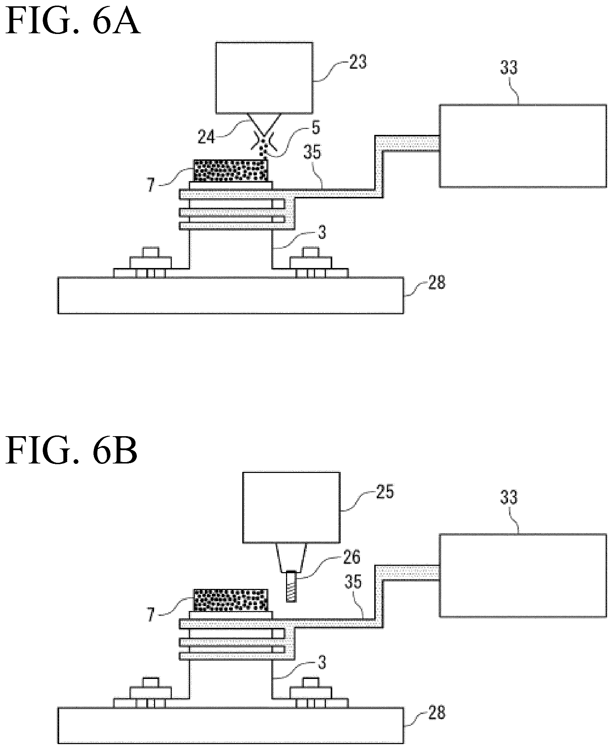

As is shown in FIG. 4, FIG. 6A and FIG. 6B, the working unit 20 includes a main shaft 21, and a shaping head 23 and a machining head 25 which are attached to the main shaft 21. For information, the working unit 20 has a concept including a shaping unit and a machining unit of the present invention.

The main shaft 21 rotates by itself, and thereby moves the shaping head 23 and the machining head 25 to required positions. In addition, the main shaft 21 gives, for example, a rotational driving force to a tool which is attached to the machining head 25. For information, only one machining head 25 is shown in FIG. 6B, but a plurality of machining heads 25 can be provided.

As is shown in FIG. 6A, a laser nozzle 24 is attached to the shaping head 23.

The laser nozzle 24 is used in the additive manufacturing step. The laser nozzle 24 irradiates the surface of the substrate 3 with a laser beam. The laser nozzle 24 discharges a raw material powder 5 which is continuously supplied from a powder supply source (not shown) to a region to be irradiated with laser, thereby melting and solidifying the raw material powder with the laser, and performs the additive manufacturing. The raw material powder 5 can be an atomized powder which is formed from the above application material and has a mean particle size of about 10 $\mu$m to 250 $\mu$m.

As is shown in FIG. 6B, a cutting tool 26, for example, is attached to the machining head 25.

The cutting tool 26 is used in the machining step after the additive manufacturing step. For the cutting tool 26, such a tool is selected as to be suitable for a material constituting the additively manufactured body 7. When the additively manufactured body 7 is formed from a cemented carbide or a cermet, it is preferable that the cutting tool 26 made from ceramics is selected.

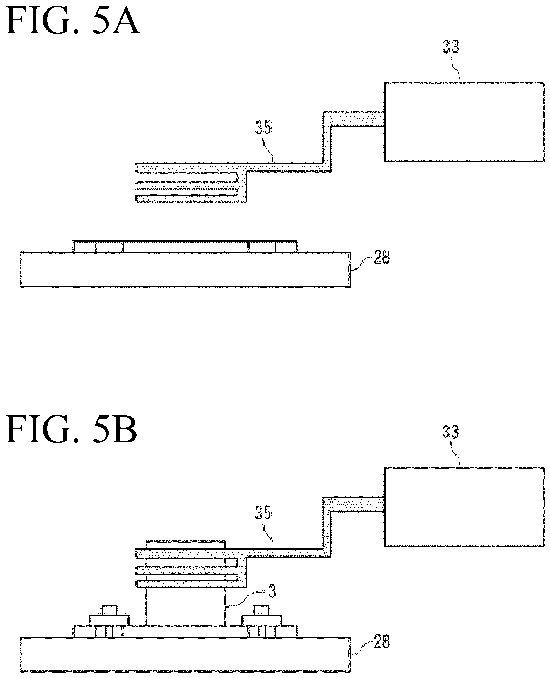

As is shown in FIG. 4 and FIG. 5B, the working unit 20 includes a table 28 to which the substrate 3 is fixed. The shaping head 23 to which the laser nozzle 24 is attached and the machining head 25 to which the cutting tool 26 is attached face the substrate 3 which is attached to the table 28, from above, and each performs the operation. A region in which the shaping head 23 and the machining head 25 operate is simply referred to as an operation region.

<Heating unit 30>

In the heating unit 30, high-frequency induction heating is responsible for a function of maintaining the heating state in the preheating step until the machining step ends.

The heating unit 30 includes: a high-frequency power source 31 which outputs a high-frequency current; a high-frequency oscillator 33 which converts the high-frequency current output from the high-frequency power source 31 to a high-frequency current having a desired frequency, and outputs the resultant current; and a high-frequency coil 35 through which the high-frequency current flows that has been output from the high-frequency oscillator 33. The high-frequency power source 31, the high-frequency oscillator 33 and the high-frequency coil 35 are portions which are directly involved in heating the substrate 3 and the additively manufactured body 7.

When the high-frequency power flows through the high-frequency coil 35, a magnetic field is formed; and a high-density eddy current is generated in the vicinity of the surface of the object to be heated which is placed in a range of the magnetic field, and the object to be heated is heated by the Joule heat. The objects to be heated in this embodiment are the substrate 3 and the additively manufactured body 7.

The heating unit 30 includes a chiller 36 and a temperature controller 37. The chiller 36 circulates a cooling medium through the high-frequency oscillator 33, and the temperature controller 37 adjusts the temperature of the high-frequency power source 31. By having the chiller 36 and the temperature controller 37, the heating unit 30 can be stably operated without being overheated.

Though the illustration is omitted, the heating unit 30 can include means for cooling another portion, for example, the table 28 of the working unit 20.

<Control unit 40>

The control unit 40 controls operations of the working unit 20 and the heating unit 30.

As for the operation of the working unit 20, the control unit 40 moves the shaping head 23 to the operation position when shaping the additively manufactured body 7, and supplies the raw material powder to the laser nozzle 24. Furthermore, the control unit directs the laser nozzle to irradiate the substrate 3 with the laser. When the shaping of the additively manufactured body 7 has been finished, the control unit 40 retracts the shaping head 23 from the operation position, and also moves the machining head 25 to the operation position. After that, the control unit 40 controls the operations of the machining head 25 and the cutting tool 26 in order to perform a predetermined cutting work. When the predetermined cutting work has been finished, the control unit 40 retracts the machining head 25.

The control unit 40 includes a first temperature sensor 41 and a second temperature sensor 43, in order to realize an appropriate heating temperature due to the heating unit 30. The first temperature sensor 41 measures a temperature T1 directly above the additively manufactured body 7 and the second temperature sensor 43 measures a temperature T3 of the substrate 3.

When the difference between the temperature T1 measured by the first temperature sensor 41 and the temperature T3 measured by the second temperature sensor 43 falls within a specified range ΔT (Expression 1), the control unit 40 directs the heating unit 30 to continue heating under the previous condition. When the difference between the temperature T1 and the temperature T3 exceeds a specified range ΔT (Expression 2), the control unit 40 directs the heating unit 30 to perform heating under a condition different from the previous condition.

$$|T1-T3| \leq \Delta T \quad ...\text{Expression (1)},$$

$$|T1-T3| > \Delta T \quad ... \text{Expression (2)}$$

Next, with reference to FIG. 5A to FIG. 6B, a procedure for obtaining the additively manufactured body 7 with the use of the additive manufacturing apparatus 1 will be described.

<Fixing of substrate 3 to preheating step>

Firstly, as is shown in FIG. 5A and FIG. 5B, the operator places and fixes the substrate 3 at a predetermined position on the table 28.

When the fixation of the substrate 3 has been finished, the operator operates an operation panel of the control unit 40, and supplies a high-frequency current to the high-frequency coil 35 of the heating unit 30 via the high-frequency power source 31 and the high-frequency oscillator 33. An eddy current is generated in the surface layer portion of the substrate 3, and thereby the substrate 3 self-heats.

In the preheating step of the substrate 3, the control unit 40 acquires the temperature T3 measured by the second temperature sensors 43, and compares the temperature T3 with a preset temperature Ts. The control unit 40 maintains an initial heating condition until the temperature T3 reaches the preset temperature Ts, but when the temperature T3 reaches the preset temperature Ts, switches to a heating condition in which the temperature T3 is maintained at the preset temperature Ts.

After the temperature has reached the preset temperature Ts, a control of maintaining the heating state is executed according to the above Expressions (1) and (2), during the next additive manufacturing step and machining step.

<Additive manufacturing step>

When the temperature of the substrate 3 has been raised to the preset temperature, as is shown in FIG. 6A, the laser nozzle 24 heats and melts the raw material powder while discharging the powder; and the melt solidifies, and thereby shapes the additively manufactured body 7 on the substrate 3. By performing the additive manufacturing while moving the laser nozzle 24, the additive manufacturing apparatus can shape the additively manufactured body 7 having a desired shape.

<Machining step>

If the desired additively manufactured body 7 has been obtained, the additive manufacturing apparatus retracts the shaping head 23 from the operation region and advances the machining head 25 into the operation region, as is shown in FIG. 6B. Then, the additive manufacturing apparatus rotates the cutting tool 26 while moving the machining head 25, and thereby works the additively manufactured body 7 into a desired shape.

<Cooling step>

When the machine work has been finished, the cooling step is performed according to the above procedure.

When the cooling step starts, the supply of an electric current to the high-frequency coil 35 is stopped. Alternatively, when it is desired to set a cooling rate, it is also possible to supply a necessary electric current to the high-frequency coil 35.

Next, the present invention will be described on the basis of specific Examples and experimental examples. For information, a substrate common to Examples and the experimental examples will be described, and then, each of Examples and the experimental examples will be sequentially described.

[Substrate]

A substrate formed from a Ni-based alloy was prepared which had the following composition (JIS NCF718 equivalent material, mass%). The substrate is produced through solution heat treatment and aging treatment (JIS G4901).

C: 0.05%, Cr: 19%, Ni: 52.5%, Mo: 3%, Nb: 5%, Al: 0.5%, Ti: 0.8%, and the balance being Fe and unavoidable impurities.

[Composite powder]

Next, the following composite powder A and composite powder B were prepared as raw material powders constituting the additively manufactured body 7.

Composite powder A: a WC-Co cemented carbide in which an amount of Co is 40 mass%

Method for producing composite powder A: a tungsten carbide powder (mean particle size: 0.8 $\mu$m) and a cobalt powder (mean particle size: 0.6 $\mu$m) were used, and the tungsten carbide powder and the cobalt powder were weighed so that the weight ratio was 6:4. Then, a small amount of carbon powder and paraffin wax were added to the weighed powder, the mixture was charged into an attritor together with ethanol and was wet-mixed, and a slurry of the mixed powder was obtained. Then, the obtained slurry of the mixed powder was dried and granulated by a spray dryer, and a granulated powder was obtained which had a mean particle size of 80 $\mu$m. The granulated powder was degreased, then was heat-treated at 1260°C, and the composite powder A was obtained. The composite powder A has a melting point of approximately 1320°C, and a machinability index of about 2 to 5. The melting point of the powder varies depending on the material composition, and accordingly was determined with reference to a reported equilibrium diagram, or a calculated phase diagram which was obtained from thermodynamic equilibrium calculation and phase diagram calculation based on the CALPHAD (CALculation of PHAse Diagram) method.

Composite powder B: TiCN-Ni cermet alloy powder of which the amount of Ni is 65 mass%

Method for producing composite powder B: a titanium carbonitride powder (mean particle size: 1.2 $\mu$m) and a nickel powder (mean particle size: 2.5 $\mu$m) were used, and the titanium carbonitride powder and the nickel powder were weighed so that the weight ratio was 5:5. Then, a small amount of carbon powder and paraffin wax were added to the weighed powder, the mixture was charged into an attritor together with ethanol and was wet-mixed, and a slurry of the mixed powder was obtained. Then, the obtained slurry of the mixed powder was dried and granulated by a spray dryer, and a granulated powder was obtained which had a mean particle size of 80 $\mu$m. The granulated powder was degreased, then was heat-treated at 1300°C, and a composite powder B was obtained. The composite powder B has a melting point of approximately 1350°C, and a machinability index of about 2 to 5.

[First Example]

[Preheating step, additive manufacturing step, and machining step]

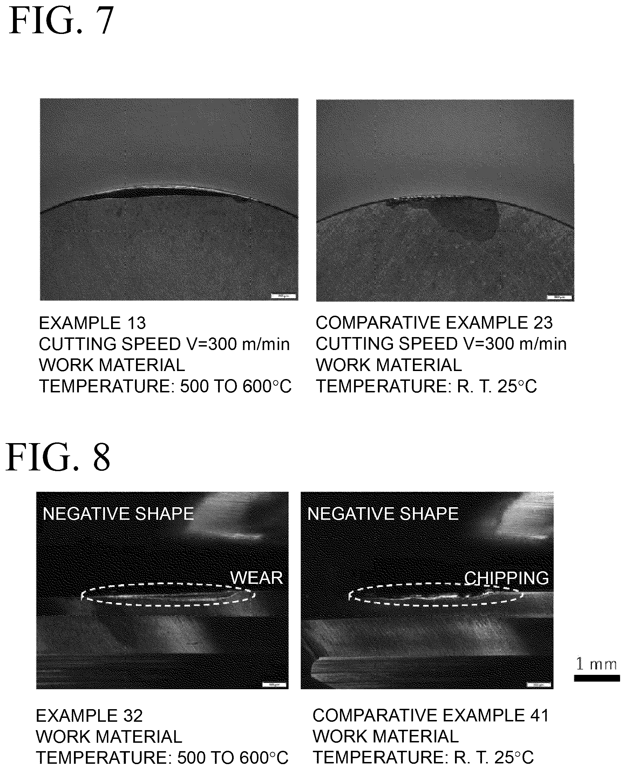

The preheating step, the additive manufacturing step and the machining step were performed under the following conditions, with the use of the substrate and the composite powder A described above. A test piece formed of the additively manufactured body 7A which used the composite powder A was used, and the machinability was evaluated with the use of cutting tools that were formed from three types of materials of ceramics (sialon), a cemented carbide and polycrystalline diamond (PCD; Polycrystalline Diamond). The cutting tools were determined to be two types which were a milling cutter and an end mill. For information, the cemented carbide is a WC-Co based cemented carbide (sintered body) which has a coating (thickness: about 3 $\mu$m) formed from TiAIN on the surface, and contains 10 mass% of Co. In addition, as for the ceramics (sialon), the same material is used in second Example which will be described later.
As for the milling tool, two types were used which had a positive shape and a negative shape. The rake angles in the axial direction after the two types of tools were attached are +5° (positive shape) and -5° (negative shape) in the latter, respectively. The clearance angles are all 5°. When the rake angle is a positive value, a biting property of the edge is good at the time of the cutting work, and the cutting resistance tends to become small. However, the thickness of the cutting edge becomes small, and accordingly the risk of chipping increases. On the other hand, when the rake angle is a negative value, the biting property of the edge at the time of the cutting work becomes poor, and the cutting resistance becomes large: but the thickness of the edge becomes large, and accordingly, the risk of chipping decreases even when the cutting load becomes excessive.
A result of the cutting test using the milling cutter is shown in Table 1, and a result of the cutting test using the end mill is shown in Table 2. FIG. 7 shows a damage form of the tool which has passed the cutting test with the use of the milling cutter, and FIG. 8 shows a damage form of the tool which has passed the cutting test with the use of the end mill.

* Preheating step:

Each of substrates made from a Ni-based alloy with 100×100×10 mm was heated to the following preheat temperature by high-frequency induction heating.
Preheat temperature; 800°C
The preheat temperature was maintained at a target temperature that was a value which was obtained by measuring a side surface of the substrate with a radiation thermometer.

* Additive manufacturing step:

Multilayer shaping method; laser melt deposition which is directed energy deposition type
The additively manufactured body is shaped under the following conditions. Shaping condition; laser output: 1000 to 2000 W, feed: 100 to 1000 mm/min, amount of powder feeding gas: 4 to 12 L/min, and lamination pitch: 0.4 to 0.8 mm. The material is attached so that the height becomes 30 mm by 20 passes per one layer, and about 40 layers are layered.

Then, an additively manufactured body with 30 mm × 30 mm × 30 mm was obtained.

Temperature at the time of additive manufacturing; maintained at the following temperature, which was a heating temperature in the preheating step

Temperature of a side surface of the substrate; 800°C

**[0118]** * Machining step: a cutting work with the use of a milling cutter (face mill) and an end mill was conducted in the pattern of FIG. 2B.

(1) Cutting conditions of milling cutter

Cutter diameter: φ50 mm

Depth of cut of shaft: 0.3 mm, depth of cut of diameter: 30 mm, cutting distance: 30 mm

Tool shape: negative (rake angle in axial direction -5°) and positive (rake angle in axial direction 5°)

Material type of tool: sialon, a cemented carbide, and PCD

Cutting speed: 20 m/min, 30 m/min, 300 m/min, and 800 m/min

Feed per tooth: 0.05 mm/tooth

Working temperature: the following temperature ranges were maintained which were the heating temperature in the preheating step, or at room temperature (R. T.) 25°C

Maintaining temperature; 100 to 200°C, 500 to 600°C, and 700 to 800°C

(2) Cutting conditions with the use of end mill

Tool diameter: φ12 mm

Depth of cut of shaft: 6 mm, depth of cut of diameter: 0.5 mm, cutting distance: 30 mm

Material type of tool: sialon and a cemented carbide

Cutting speed: 30 m/min and 300 m/min

Working temperature: the following temperature ranges were maintained among the heating temperatures in the preheating step, or at room temperature (R. T.) 25°C

Maintaining temperature; 100 to 200°C and 500 to 600°C

[Table 1]

| | No. | Material of tool | Tool shape (milling cutter) | Work material heating temperature [°C] | Cutting speed [m/min] | Damage width [mm] | | Damage form | Evaluation |
|---|---|---|---|---|---|---|---|---|---|
| | | | | | | Rake face | Flank face | | |
| Example | 11 | Ceramics | Negative | 100-200 | 300 | 0.98 | 0.87 | Wear | Good |
| | 12 | | | 500-600 | 30 | 0.41 | 0.57 | Wear | Good |
| | 13 | | | | 300 | 0.27 | 1.00 | Wear | Good |
| | 14 | | | | 800 | 0.28 | 1.49 | Wear | Good |
| | 15 | | | 700-800 | 300 | 0.33 | 1.26 | Wear | Good |
| | 16 | | Positive | 500-600 | 300 | 0.36 | 0.70 | Wear | Good |
| | 17 | Cemented carbide | | | 30 | 0.82 | 1.10 | Wear | Good |
| Comparative Example | 21 | | | R.T. (25) | 30 | 0.91 | 1.20 | Chipping | Poor |
| | 22 | PCD | | R.T. (25) | 20 | - | - | Breakage | Poor |
| | 23 | Ceramics | Negative | R.T. (25) | 300 | 1.28 | 0.96 | Chipping | Poor |

EP 3 888 819 A1

[Table 2]

| | No. | Material of tool | Tool shape (milling cutter) | Work material heating temperature [°C] | Cutting speed [m/min] | Flank face Damage width [mm] | Damage form | Evaluation |
|---|---|---|---|---|---|---|---|---|
| Example | 31 | Ceramics | Negative | 100-200 | 300 | 0.20 | Wear | Good |
| | 32 | | | 500-600 | | 0.26 | Wear | Good |
| | 33 | | Positive | 100-200 | | 0.22 | Wear | Good |
| Comparative Example | 41 | | Negative | R.T. (25) | | 0.28 | Chipping | Fair |
| | 42 | Cemented carbide | Positive | | 30 | 0.45 | Chipping | Poor |

As is shown in Table 1 and FIG. 7, when the work material was heated, the damage width of the tool decreased as compared with the case where the work material was not heated. When the material of the tool was ceramics, and was worked at room temperature, the damage form of the tool was chipping. On the other hand, when the work material was heated, the damage form became wear and the damage width was reduced.

As is shown in FIG. 7, when the heating temperature for the work material is increased to 500 to 600°C, the damage width of the tool decreases, the damage form also changes from a chipped form to a wear form, and stable cutting can be performed. This is considered to be because the work material was heated, thereby the work material was softened, and the load applied to the tool was reduced. In other words, it can be said that a wear state of the tool shifts to a stable state due to cutting with heating. In addition, it was confirmed that when the heating temperature was 500 to 600°C, a satisfactory wear form was obtained regardless of the tool shape. As is shown in Comparative Example, as for the cutting at room temperature, the cutting work was difficult because the tool was chipped and broken at an early stage. The machinability index of the cemented carbide is extremely small, and heat cutting functions effectively. The effect of the heat cutting on the Ni-based superalloy (Alloy718) and the like other than the cemented carbide was also confirmed, and it was confirmed that the heat cutting is particularly effective on the work material such as the cemented carbide which is difficult to cut at room temperature.

As is shown in Table 2 and FIG. 8, the effect of the heat cutting was confirmed also when the tool was the end mill. It was confirmed that also in the end mill which has a sharp cutting edge as compared with the milling cutter, the damage form is shifted to the wear form from the chipping, by heating of the work material.

[Second Example]

The above substrate, the composite powder A and the composite powder B were used. The additively manufactured body 7A which used the composite powder A and the additively manufactured body 7B which used the composite powder B were both prepared in the same manner as in first Example, except that the preheating step, the additive manufacturing step and the machining step were adopted under the following conditions. It was able to cut both of the additively manufactured body 7A and the additively manufactured body 7B under the following conditions.

* Preheating step:

A substrate made from a Ni-based alloy with 100×100×10 mm was heated to 700°C by high-frequency induction heating.

* Additive manufacturing step;

Multilayer shaping method; laser melt deposition which is directed energy deposition type
The additively manufactured body is shaped under the following conditions. Shaping condition; laser output: 1000 to 2000 W, feed: 100 to 1000 mm/min, amount of powder feeding gas: 4 to 12 L/min, and lamination pitch: 0.4 to 0.8 mm. The material is attached so that the height becomes 10 mm by 20 passes per one layer, and about 15 layers are layered. Then, an additively manufactured body with 30 mm × 30 mm × 10 mm was obtained.

Temperature at the time of additive manufacturing: maintained at 700°C, which was a heating temperature in the preheating step
**[0128]** * Machining step: a cutting work with the use of a milling cutter (face mill) was conducted in the pattern of FIG. 2B.

Cutter diameter: φ50 mm, tip: made from sialon
Cutting speed: 1000 m/min, feed 0.08 mm/t
Depth of cut of shaft: 0.5 mm, depth of cut of diameter: 30 mm, cutting distance: 30 mm
Working temperature: maintained at 700°C, which was the heating temperature in the preheating step

[Evaluation of heating temperature and hardness]

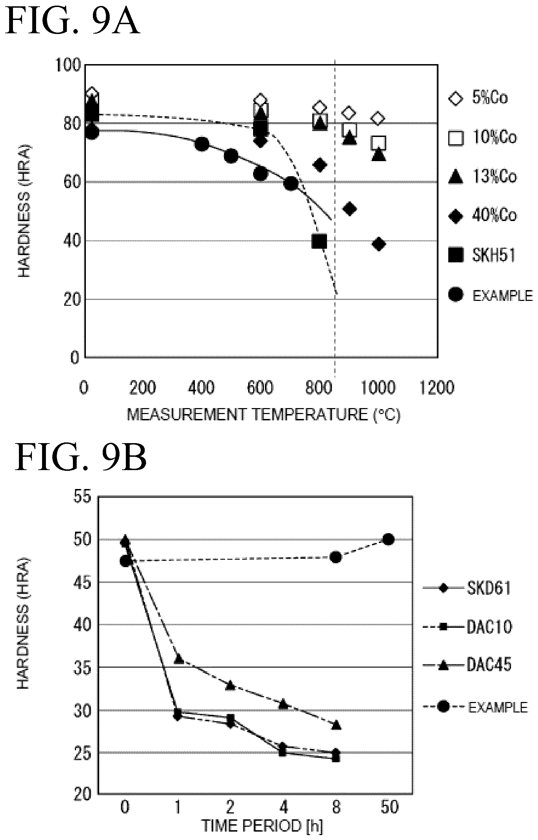

Next, the test piece (Example) obtained from the additively manufactured body 7A which was obtained as in the above description, WC-Co based cemented carbides (sintered bodies) in which the amount of Co was changed, and the high-speed tool steel (JIS SKH51) were used, and the relationship between the heating temperature and the hardness was measured. The hardness was calculated by using a high-temperature micro Vickers hardness tester (AVK-HF) manufactured by Mitutoyo Corporation, pressing a diamond indenter into a test piece heated to each temperature (load 30 kgf), and measuring a diagonal length of the indentation.
The results are shown in FIG. 9A. For information, the additively manufactured body 7A was subjected to heat treatment of holding the body at 1200°C for 2 hours in a vacuum, and then to the measurement. In addition, in FIG. 9A, 5% Co to 40% Co and the like mean cemented carbides in which the amounts of Co are 5 mass% to 40 mass% and the balance being WC.
As is shown in FIG. 9A, it has been confirmed that in the high-speed tool steel, the hardness rapidly decreases from about 600°C, but in contrast to this, in Example, the hardness of HRA 40 or higher was maintained at 800°C, and Example had a hardness equivalent to that of the cemented carbides (sintered bodies).
In addition, softening resistance was evaluated by using a test piece (Example) obtained from the additively manufactured body 7A and measuring a change in hardness of the test piece which was held at 700°C (in the air) for a predetermined time period. The results are shown in FIG. 9B. In addition, the steels for hot die (JIS SKD61, DAC10 and DAC45) were also evaluated in the same manner, for the purpose of comparison. For information, "DAC" is a registered trademark of Hitachi Metals, Ltd.
As is shown in FIG. 9B, Example is the cemented carbide, and accordingly exhibits extremely high softening resistance as compared with the steels for hot dies.

[Evaluation of high-temperature wear test]

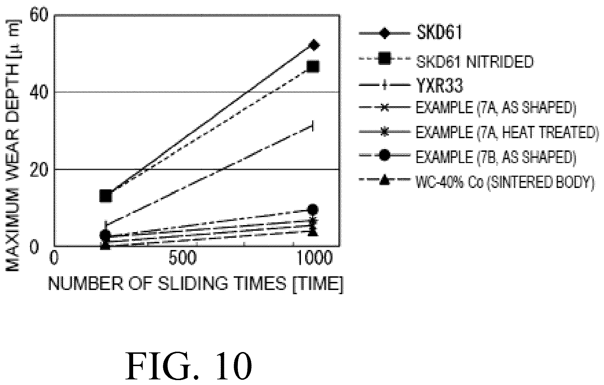

Next, the test piece (Example 7A) obtained from the additively manufactured body 7A was subjected to the measurement of mechanical properties and a high-temperature wear test. The test piece (Example 7B) obtained from the additively manufactured body 7B was also subjected to the high-temperature wear test. The additively manufactured body 7B is a cermet material which contains TiCN in the hard phase and 65 mass% Ni in the binder phase.
The results of the mechanical properties are shown in Table 3, and the results of the high-temperature wear test are shown in FIG. 10. In addition, the same tests were performed on steels for hot dies (JIS SKD61, SKD61+nitriding, and YXR33) and a cemented carbide (WC-40% Co sintered), for the purpose of comparison. For information, "YXR" is a registered trademark of Hitachi Metals, Ltd.
The test conditions are as follows, and as for the test, a test piece is pressed against the outer periphery of a cylindrical workpiece which rotates while being decentered. The number of times of sliding in the horizontal axis of FIG. 10 corresponds to the number of rotations of the workpiece.

Workpiece temperature: 900°C, test piece temperature: about 25 to 100°C
Speed of outer periphery of workpiece: 30 m/min, vertical load: 250N

The present Example shows remarkably high wear resistance as compared with steel for hot dies, and has wear resistance equivalent to that of the cemented carbide (sintered body).
Table 3 shows measurement results of the strengths of a cemented carbide (Example) produced by the multilayer shaping, and a cemented carbide (sintered body) produced by ordinary sintering. A transverse rupture strength of the cemented carbide produced by the multilayer shaping is lower than that of the sintered cemented carbide, but this is because the structure of the carbide of the shaped material is large. On the other hand, in the case where the shaped material has coarse carbides, the shaped material exhibits friction resistance characteristics as described in FIG. 10, and is suitable for a portion or an application which requires high wear resistance.

[Table 3]

| Sample (about 50 HRC) | | Transverse test | | |
|---|---|---|---|---|
| | | Breaking force | Transverse rupture strength | Deflection |
| | | kN | MPa | mm |
| Example | As shaped | 5.814 | 1361 | 0.238 |
| | Heat treatment | 6.179 | 1424 | 0.255 |
| WC-40% Co (sintered body) | | 9.658 | 2263 | 0.399 |

As shaped: as cemented carbide subjected to multilayer shaping
Heat treatment: cemented carbide as shaped was held at 1200°C in a vacuum for 2 hours

[Experimental example 1]

[Evaluation of high-temperature machinability by cutting tool]

Next, with the use of a test piece obtained from the additively manufactured body 7A, the machinability was evaluated with the use of two types of cutting tools of ceramics (sialon) and a cemented carbide. As the cemented carbide, the same cemented carbide as that used in first Example was used, which had a coating formed from TiAlN on the surface. This evaluation was performed for each of the test piece at room temperature and the test piece heated to 700°C. The results are shown in Table 4.

Firstly, even if the cutting tool is any of ceramics and a cemented carbide having the coating of TiAlN thereon, cutting is possible as long as the test piece is heated. In particular, when the cutting tool is formed from ceramics, cutting at a high cutting speed of 1000 m/min is realized.

[Table 4]

| Cutting tool | Work material | Heating temperature (°C) | Cutting speed (m/min) | Cutting state |
|---|---|---|---|---|
| Ceramics | Cemented carbide | 700 | 1000 | Excellent |
| Ceramics | Cemented carbide | 25 | 1000 | Poor |
| Cemented carbide | Cemented carbide | 700 | 30 | Fair |
| Cemented carbide | Cemented carbide | 25 | 30 | Poor |

Cutting tool: Ceramics ... Sialon
Cemented carbide ... WC-Co cemented carbide (Co: 10 mass%)
Work material: First Example (WC-Co cemented carbide (Co: 40 mass%))
Cutting state: Excellent: Highly efficient cutting is possible and tool wear is normal.
Fair: Cutting is possible but progression speed of wear is high.
Poor: Tool is chipped and a cutting state cannot be maintained.

[Experimental example 2]

When the additively manufactured body is large, it is difficult to uniformalize the temperature by the high-frequency induction heating, and it takes time to heat the entire additively manufactured body, although a portion close to the coil is red-heated. Then, in order to control the temperature in the vicinity of the point to be worked at the time of the additive manufacturing and the cutting work, a heating mechanism using a semiconductor laser was provided, in addition to the high-frequency induction heater which was used in first Example and second Example. The rest was the same as in first Example.

A temperature of the test piece obtained from the additively manufactured body 7A was raised only by the high-frequency induction heater. At this time, when the preset temperature of the high-frequency induction heater was 800°C, the temperature of the side surface of the additively manufactured body 7A reached 800°C within approximately 5 minutes, but the temperature in the vicinity of the central portion of the upper surface of the additively manufactured body 7A was about 650°C. On the other hand, it was confirmed that when heating with a semiconductor laser was applied to the vicinity of the central portion of the upper surface of the additively manufactured body 7A having the same dimensions, the temperature rose to 800°C was observed in about 10 minutes, and that an environment for preheat shaping and heat cutting was prepared in a more uniform state.

Reference Signs List

| | |
|---|---|
| 1 | Additive manufacturing apparatus |
| 3 | Substrate |
| 5 | Raw material powder |
| 7 | Additively manufactured body |
| 10 | Housing |
| 11 | Door |
| 20 | Working unit (shaping unit, machining unit) |
| 21 | Main shaft |
| 23 | Shaping head |
| 24 | Laser nozzle |
| 25 | Machining head |
| 26 | Cutting tool |
| 28 | Table |
| 30 | Heating unit |
| 31 | High-frequency power source |
| 33 | High-frequency oscillator |
| 35 | High-frequency coil |
| 36 | Chiller |
| 37 | Temperature controller |
| 40 | Control unit |
| 41 | First temperature sensor |
| 43 | Second temperature sensor |

**Claims**

1. A method for manufacturing an additively manufactured body comprising:

   an additive manufacturing step of shaping the additively manufactured body in a heating state; and
   a machining step of machining the additively manufactured body in a state in which the heating state is maintained.

2. The method for manufacturing the additively manufactured body according to claim 1, wherein

   the additive manufacturing step and the machining step are repeated a plurality of times, and
   the heating state is maintained in the additive manufacturing step and the machining step which are repeated a plurality of times.

3. The method for manufacturing the additively manufactured body according to claim 1 or claim 2, further comprising:
   a preheating step of heating a substrate on which the additively manufactured body is to be shaped, until the substrate becomes the heated state, prior to the additive manufacturing step.

4. The method for manufacturing the additively manufactured body according to any one of claim 1 to claim 3, wherein the additively manufactured body comprises a difficult-to-cut material having a machinability index of 50 or lower.

5. The method for manufacturing the additively manufactured body according to any one of claim 1 to claim 4, wherein the heating state is realized by one or both of high-frequency induction heating and a semiconductor laser.

6. The method for manufacturing the additively manufactured body according to any one of claim 1 to claim 5, wherein

   in the additive manufacturing step,

the additively manufactured body is shaped by melting a raw material powder which is supplied continuously or intermittently, and solidifying the melt.

7. The method for manufacturing the additively manufactured body according to any one of claim 1 to claim 6, wherein when Mp (°C) is defined as a melting point of the material constituting the additively manufactured body, the heated state has a temperature of 1/6 Mp or higher and 5/6 Mp or lower.

8. The method for manufacturing the additively manufactured body according to any one of claim 1 to claim 7, wherein the machining step comprises machining with a ceramic tool.

9. An apparatus for manufacturing an additively manufactured body comprising:

a shaping unit for shaping the additively manufactured body;
a machining unit for machining the additively manufactured body; and
a heating unit for heating the additively manufactured body, at least in a process of shaping the additively manufactured body by the shaping unit and in a process of the machining by the machining unit.

10. The apparatus for manufacturing the additively manufactured body according to claim 9, wherein the heating unit heats the additively manufactured body by one or both of high-frequency induction heating and a semiconductor laser.

# FIG. 1

PREHEATING SUBSTRATE ———S101

↓

ADDITIVE MANUFACTURING (POWDER BUILDING) ———S103

↓

MACHINE WORK (CUTTING WORK, PLASTIC WORKING ...) ———S105

↓

COOLING (SLOW COOLING / NATURAL COOLING) ———S107

HEATING STATE MAINTAINED

FIG. 2A

FIG. 2B

FIG. 2C

FIG. 3A

FIG. 3B

FIG. 3C

FIG. 4

FIG. 5A

FIG. 5B

FIG. 6A

FIG. 6B

# FIG. 7

EXAMPLE 13
CUTTING SPEED V=300 m/min
WORK MATERIAL
TEMPERATURE: 500 TO 600°C

COMPARATIVE EXAMPLE 23
CUTTING SPEED V=300 m/min
WORK MATERIAL
TEMPERATURE: R. T. 25°C

# FIG. 8

1 mm

EXAMPLE 32
WORK MATERIAL
TEMPERATURE: 500 TO 600°C

COMPARATIVE EXAMPLE 41
WORK MATERIAL
TEMPERATURE: R. T. 25°C

# FIG. 9A

# FIG. 9B

FIG. 10

## INTERNATIONAL SEARCH REPORT

| International application No. |
| --- |
| PCT/JP2019/046786 |

A. CLASSIFICATION OF SUBJECT MATTER
B22F 3/105(2006.01)i; B22F 3/16(2006.01)i; B22F 3/24(2006.01)i; C22C 1/04(2006.01)i; C22C 1/05(2006.01)i; C22C 19/05(2006.01)i; B33Y 10/00(2015.01)i; B33Y 30/00(2015.01)i
FI: B22F3/16; C22C1/04 B; C22C1/05 F; B22F3/105; B22F3/24 G; B33Y10/00; B33Y30/00; C22C19/05 Z
According to International Patent Classification (IPC) or to both national classification and IPC

B. FIELDS SEARCHED

Minimum documentation searched (classification system followed by classification symbols)
B22F3/105; B22F3/16; B22F3/24; C22C1/04; C22C1/05; B29C64/00-64/40; B33Y30/00

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 6295001 B1 (SODICK CO., LTD.) 23.02.2018 (2018-02-23) claims, paragraphs [0014]-[0057], fig. 1, 6 | 1-10 |
| Y | | 1-10 |
| Y | JP 2002-220628 A (NATIONAL INSTITUTE OF ADVANCED INDUSTRIAL SCIENCE AND TECHNOLOGY) 09.08.2002 (2002-08-09) paragraph [0007] | 1-10 |
| A | JP 2018-3087 A (CANON INC.) 11.01.2018 (2018-01-11) claims, drawings | 1-10 |
| A | WO 2007/010598 A1 (HOMS ENGINEERING INC.) 25.01.2007 (2007-01-25) paragraphs [0046]-[0048], [0121], [0154]-[0155], fig. 17 | 1-10 |

☐ Further documents are listed in the continuation of Box C.        ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>29 January 2020 (29.01.2020) | Date of mailing of the international search report<br>10 February 2020 (10.02.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

<table>
<tr><td colspan="2">**INTERNATIONAL SEARCH REPORT**<br>Information on patent family members</td><td>International application No.<br><br>PCT/JP2019/046786</td></tr>
</table>

| Patent Documents referred in the Report | Publication Date | Patent Family | Publication Date |
|---|---|---|---|
| JP 6295001 B1 | 23 Feb. 2018 | US 2019/0061001 A1<br>claims, paragraphs [0041]-[0122], fig. 1, 6<br>EP 3450060 A1<br>KR 10-2019-0024703 A<br>CN 109622954 A<br>TW 201912377 A | |
| JP 2002-220628 A | 09 Aug. 2002 | (Family: none) | |
| JP 2018-3087 A | 11 Jan. 2018 | (Family: none) | |
| WO 2007/010598 A1 | 25 Jan. 2007 | (Family: none) | |

Form PCT/ISA/210 (patent family annex) (January 2015)

**REFERENCES CITED IN THE DESCRIPTION**

**Patent documents cited in the description**

- JP 2016502596 A